# EUROPÄISCHE PATENTSCHRIFT

(11) **EP 1 432 593 B1**
(45) Veröffentlichungstag und Bekanntmachung des Hinweises auf die Patenterteilung: **17.05.2006**
(21) Anmeldenummer: 02774387.1
(22) Anmeldetag: 20.09.2002
(51) Int. Cl.: B60N 2/02, B60R 16/02, H04L 12/10

(54) **STEUERUNGS- UND ENERGIEVERSORGUNGSSYSTEM FÜR WENIGSTENS ZWEI FLUGZEUGSITZPLÄTZE**
CONTROL AND POWER SUPPLY SYSTEM FOR AT LEAST TWO AIRPLANE SEATS
SYSTEME DE COMMANDE ET D'ALIMENTATION EN ENERGIE POUR AU MOINS DEUX SIEGES D'AVION

(30) Priorität: 02.10.2001 DE 10148810
(43) Veröffentlichungstag der Anmeldung: 30.06.2004
(60) Teilanmeldung: 05024497.9
(73) Patentinhaber: Recaro Aircraft Seating GmbH & Co. KG, 74523 Schwäbisch Hall (DE)
(72) Erfinder: WAGNER, Wolfgang, 88048 Friedrichshafen (DE)
(74) Vertreter: Bartels & Partner
(86) Internationale Anmeldenummer: PCT/DE2002/003525
(87) Internationale Veröffentlichungsnummer: WO 2003/031220

(56) Entgegenhaltungen:
- EP-A- 0 973 079
- EP-A- 1 028 512
- GB-A- 2 318 429
- US-A- 6 094 604

## Beschreibung

Die Erfindung betrifft ein Steuerungs- und Energieversorgungssystem für die Aktuatoren in Flugzeugsitzplätzen.

Bei den Steuereinheiten, Antriebseinheiten und sonstigen Konfigurationsänderungselementen eines Flugzeugsitzes können folgende schwerwiegende Fehler auftreten: Lose oder abgefallene Steck- oder sonstiger Verbinder, Kabelbruch, Kurzschlüsse zu Masse oder einer anderen Versorgungsleitung, ausgefallene Steuereinheiten sowie der Ausfall von Antriebseinheiten oder Eingabeeinheiten bzw. Bedienungselementen, bei denen es sich beispielsweise um Taster, Schalter, Chipkartenleser evtl. mit einem Display handeln kann.

Durch die gattungsbildende EP 0 973 079 A1 ist eine Installation zum Betrieb von mit einer Zusammenstellung von Aktuatoren ausgerüsteten Sitzmodulen bekannt. Bei der bekannten Lösung dient jeder Aktuator zum Einstellen eines Sitzelements. Die bekannte Lösung weist eine Steuereinheit für jedes Sitzmodul auf. Die Steuereinheit umfasst hierbei Mittel zum Erfassen von Variablen, die den Funktionszustand des Sitzmoduls repräsentieren. Eine zentrale Einheit für das Management der Sitzmodule ist bei der bekannten Lösung mit der Steuereinheit verbunden und weist Mittel für das Übertragen von Informationen zu den Steuereinheiten auf. Des Weiteren weist jede Steuereinheit Mittel zum Übertragen von den Funktionszustand des zugeordneten Sitzmoduls repräsentierenden Variablen an die zentrale Managementeinheit auf.

Der vorliegenden Erfindung liegt die Aufgabe zugrunde, ein System anzugeben, bei dem die Funktion der Antriebseinheiten bzw. sonstiger Konfigurationsänderungselemente sichergestellt ist.

Diese Aufgabe wird erfindungsgemäß durch die Merkmale des unabhängigen Patentanspruchs gelöst.

Eine vorteilhafte Ausgestaltung der Erfindung ist im abhängigen Anspruch 2 gekennzeichnet.

Die Erfindung sieht ein Redundanzkonzept vor, das fehlertolerant ist.

Das erfindungsgemäße System besteht aus einer für den jeweiligen Flugzeugsitzplatz angepaßten Anzahl von Antriebseinheiten und Überwachungseinheiten, bzw. Aktuatoren, wobei diese Elemente von wenigstens zwei vorzugsweise benachbarten Flugzeugsitzplätzen in Form einer Bus-Struktur angeordnet sind. Das System kann aber auch die Elemente von drei oder mehr Flugzeugsitzplätzen umfassen.

Das erfindungsgemäße System enthält für die wenigstens zwei Flugzeugsitzplätze nur eine einzige gemeinsame Steuereinheit. Diese Steuereinheit steuert über- eine Datenleitungseinrichtung die Aktuatoren. Über sein Bedienelement, das über eine Intelligenz oder zumindest über einen Treiber für die Datenleitungseinrichtung verfügt, steuert der Benutzer die für seinen Sitz relevanten Aktuatoren. Dabei werden die Daten von dem Bedienelement über die von allen Elementen genutzte Datenleitungseinrichtung an die Steuereinheit geleitet. Die Steuereinheit löst dann wiederum über die Datenleitungseinrichtung bei den Aktuatoren eine entsprechende Reaktion aus. Diese Reaktion wird bevorzugt durch Rückmeldungen der Aktuatoren über die Datenleitungseinrichtung an die Steuereinheit gemeldet. Diese kontrolliert und regelt gegebenenfalls den gesamten Bewegungsablauf.

Erfindungsgemäß ist ferner vorgesehen, dass die Aktuatoren intelligent sind und dass ihnen im Fehlerfall der Steuereinheit ein erweitertes Aufgabenspektrum zugewiesen wird. Fällt die Steuereinheit aus irgendeinem Grunde aus oder gibt diese wegen eines Defektes unlogische Daten aus, so wird von den Aktuatoren diese Fehlfunktion erkannt. In einer speziellen Routine beschließen sie, die Funktion der Steuereinheit durch ihre verteilte Intelligenz zu übernehmen. Jeder Aktuator meldet seine für die restlichen Aktuatoren relevanten Daten auf die Datenleitungseinrichtung. Er liest die für sich relevanten Daten von der Datenleitungseinrichtung ein und reagiert entsprechend intelligent. Eine oder mehrere Einheiten lesen auch die Daten der oder des Bedienelementes, reagieren entsprechend und melden gegebenenfalls die relevanten Daten an die anderen Aktuatoren weiter. Es kann auch vorgesehen sein, dass ein Aktuator die Funktion der Steuereinheit komplett übernimmt.

Da die Antriebseinheiten beim Ausfall der Steuereinheit ohne diese auskommen, ist ein Redundanzkonzept verwirklicht, das beim Ausfall der einzigen Steuereinheit weiter funktioniert. Die Hardware einer zweiten Steuereinheit wird so durch Software in den Antriebseinheiten bzw. Aktuatoren ersetzt.

Bei dem vorstehend beschriebenen Erfindungsgedanken, wonach bei Fehlfunktion einer Steuereinheit deren Funktion von den Aktuatoren übernommen wird, ist bevorzugt für die Elemente jedes Flugzeugsitzes eine eigene Busstruktur in Form einer Stichleitung vorgesehen.

Weitere Einzelheiten der Erfindung ergeben sich aus der nachfolgenden Beschreibung bevorzugter Ausführungsformen sowie anhand der Zeichnung. Dabei zeigen:
- Figur 1: ein System mit einer Steuereinheit und verteilter Intelligenz;
- Figur 2: ein zweites Bussystem.

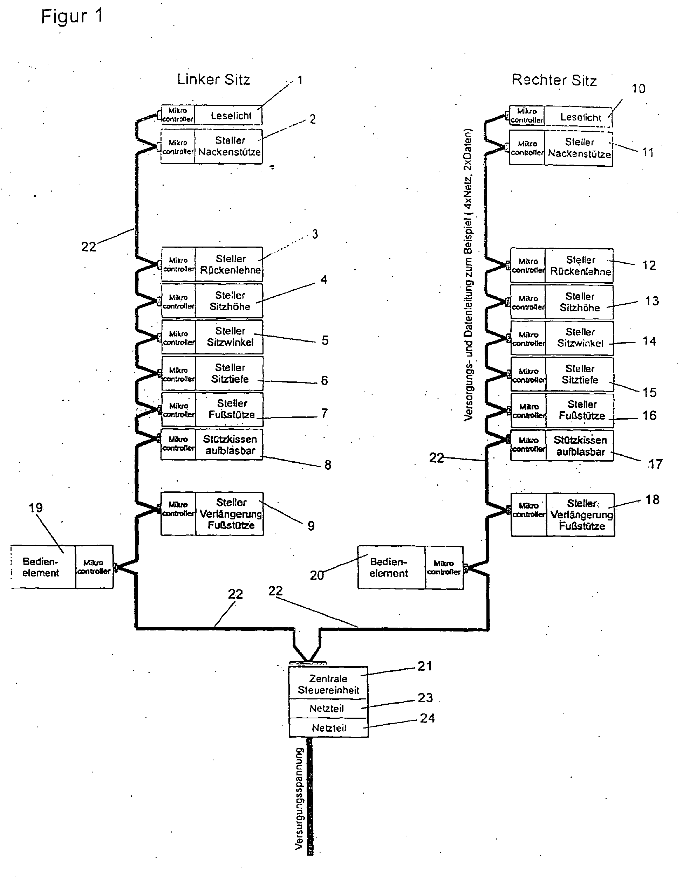

Bei dem in Figur 1 dargestellten System sind die Elemente eines linken Flugzeugsitzplatzes und eines rechten Flugzeugsitzplatzes jeweils über eine Datenleitungseinrichtung 22 mit einer gemeinsamen Steuereinheit 21 verbunden.

Bei den Aktuatoren 1 bis 9 des linken Sitzes und 10 bis 18 des rechten Sitzes kann es sich um folgende Elemente handeln: Leselicht 1, 10, Kopfstützen-Aktuator 2, 11, Rückenlehnen-Aktuator 3, 12, Sitzhöhen-Aktuator 4, 13, Sitzwinkel-Aktuator 5, 14, Sitztiefen-Aktuator 6, 15, Fußstützen-Aktuator 7, 14, Luftsystem 8, 17, Fußstützen-Aktuator extern 9, 18. Die Aktuatoren sind jeweils mit einem Mikrocontroller versehen, der die Intelligenz trägt und die Kommunikation bewerkstelligt.

Über ein Bedienelement 19 oder 20 werden die für den linken bzw. rechten Sitz vorgesehenen Aktuatoren 1 bis 9 bzw. 10 bis 18 gesteuert. Dabei werden die Daten von dem Bedienungselement 19 bzw. 20 über die Datenleitungseinrichtung 22 an die Steuereinheit 21 geleitet. Die Steuereinheit 21 löst dann wiederum über die Datenleitungseinrichtung 22 bei den jeweiligen Aktuatoren eine entsprechende Reaktion aus. Diese Reaktion wird wiederum durch Rückmeldung der Aktuatoren über die Datenleitungseinrichtung 22 an die Steuereinheit 21 gemeldet, die den gesamten Bewegungsablauf kontrolliert und regelt.

Wenn die Steuereinheit 21 ausfällt, wird von den Aktuatoren über deren Software diese Fehlfunktion erkannt, woraufhin sie die Funktion der Steuereinheit durch ihre verteilte Intelligenz übernehmen. Jeder Aktuator 1 bis 18 meldet seine für die restlichen Aktuatoren 1 bis 18 relevanten Daten auf die Datenleitungseinrichtung 22. Er liest die für sich relevanten Daten von der Datenleitungseinrichtung 22 ein und reagiert entsprechend intelligent. Eine oder mehrere Einheiten lesen auch die Daten des Bedienungselementes oder der Bedienungselemente 19, 20, reagieren entsprechend und meiden gegebenenfalls die relevanten Daten an die anderen Aktuatoren 1 bis 18 weiter.

Das in Figur 1 dargestellte System enthält zwei Netzteile 23, 24. Die Versorgungs- und Datenleitung 22 enthält bevorzugt vier Netzleitungen und zwei Datenleitungen.

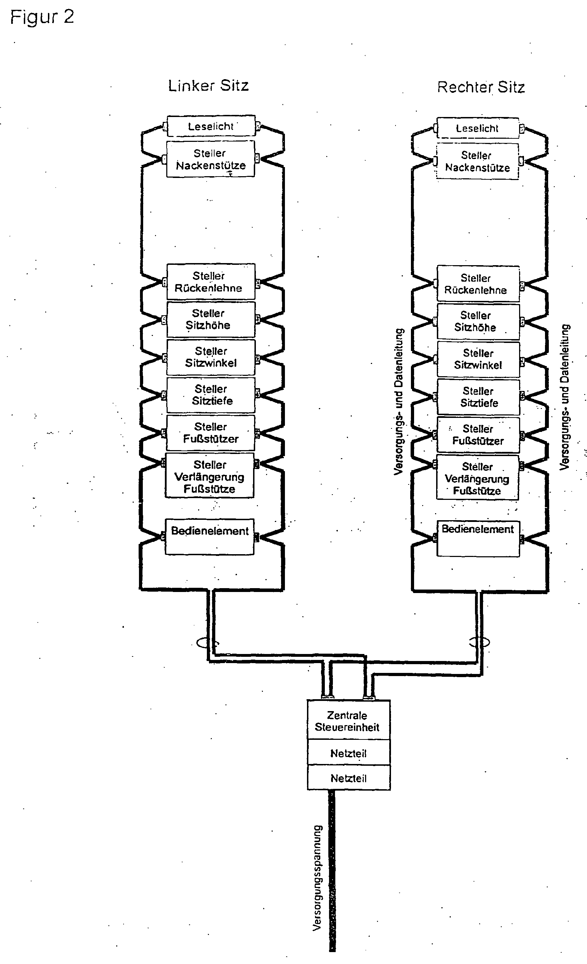

Figur 2 zeigt ein System, bei dem jeder Aktuator über zwei räumlich und elektrisch getrennte Kabelbäume versorgt wird. Jeder Kabelbaum besteht aus zwei Leitungen für den Datenbus und zwei Leitungen für die Versorgung aus den beiden Netzteilen. Dies hat den Vorteil, dass für jeden Leitungsfehler Redundanz vorhanden ist.

## Patentansprüche

1. Steuerungs- und Energieversorgungssystem für die Aktuatoren von wenigstens zwei vorzugsweise benachbarten Flugzeugsitzplätzen,
**dadurch gekennzeichnet,**
**dass** die Aktuatoren (1 bis 9) eines Flugzeugsitzplatzes und die Aktuatoren (10 bis 18) wenigstens eines weiteren Flugzeugsitzplatzes über eine Datenleitungseinrichtung mit einer gemeinsamen Steuereinheit (21) verbunden sind,
**dass** jeder Aktuator (1 bis 18) von wenigstens zwei Netzgeräten (23, 24) mit Strom versorgbar ist,
und **dass** bei Ausfall der Steuereinheit (21) wenigstens ein Aktuator die Funktion der Steuereinheit übernimmt, wozu der wenigstens eine Aktuator mit einer entsprechenden Software ausgestattet ist.

2. Steuerungs- und Energieversorgungssystem nach Anspruch 1,
**dadurch gekennzeichnet, dass** mehrere oder alle Aktuatoren (1 bis 18) durch ihre Verteilte Intelligenz die Funktion der Steuereinheit (21) übernehmen.

## Claims

1. Control and energy supply system for the actuators of at least two preferably adjacent aeroplane seats, **characterised in that** the actuators (1 to 9) of one aeroplane seat and the actuators (10 to 18) of at least one further aeroplane seat are connected via a data line means with a common control unit (21), and **in that** each actuator (1 to 18) is supplied with power by at least two network units (23, 24), and **in that** at least one actuator takes over the function of the control unit during a failure of one control unit (21), for which the at least one actuator is equipped with relevant software.

2. Control and energy supply system according to Claim 1, **characterised in that** several or all actuators (1 to 18) carry out the function of the control unit (21) by means of their distributed intelligence.

## Revendications

1. Système de commande et d'alimentation en énergie pour les actionneurs d'au moins deux sièges d'avion de préférence voisins, **caractérisé**
**en ce que** les actionneurs (1 à 9) d'un siège d'avion et les actionneurs (10 à 18) d'au moins un deuxième siège d'avion sont reliés à une unité de commande (21) commune par une installation de ligne de données,
**en ce que** chaque actionneur (1 à 18) peut être alimenté en courant par au moins deux blocs-secteur (23, 24)
et **en ce que**, quand l'unité de commande (21) tombe en panne, au moins un actionneur assume la fonction d'unité de commande, pour ce faire l'au moins un actionneur est équipé d'un logiciel correspondant.

2. Système de commande et d'alimentation en énergie selon la revendication 1, **caractérisé en ce que** plusieurs ou tous les actionneurs (1 à 18) assument du fait de leur intelligence partagée la fonction d'unité de commande.
